Europäisches Patentamt

European Patent Office

Office européen des brevets

(11) Numéro de publication : **0 001 026**
**B1**

# (12) FASCICULE DE BREVET EUROPÉEN

(45) Date de publication du fascicule du brevet :
17.06.81

(21) Numéro de dépôt : 78400076.2

(22) Date de dépôt : 17.08.78

(51) Int. Cl.³ : **C 08 L 27/06**

(54) Composition à base de chlorure de polyvinyle rigide et objets conformés avec une telle composition.

(30) Priorité : 29.08.77 FR 7726780

(43) Date de publication de la demande :
07.03.79 (Bulletin 79/05)

(45) Mention de la délivrance du brevet :
17.06.81 Bulletin 81/24

(84) Etats contractants désignés :
BE CH DE GB NL SE

(56) Documents cités :
FR - A - 2 256 930

(73) Titulaire : SEPEREF-TMP SOCIETE POUR L'EQUIPE-
MENT DES RESEAUX EN CANALISATIONS DE
MATIERES PLASTIQUES
Quincieux
F-69650 Saint-Germain-au-Mont-d'Or (FR)

(72) Inventeur : Mozzo, Gilbert
Le Crouloup Quincieux
F-69650 Saint Germain au Mont d'Or (FR)
Inventeur : Kuranda, Jean Claude
Frans les Vernes
F-01480 Jassaus Riottier (FR)

(74) Mandataire : Harlé, Robert et al
c/o Cabinet Harlé & Lechopiez 21, rue de la Rochefoucauld
F-75009 Paris (FR)

Imprimerie Jouve, 17, rue du Louvre, 75001 Paris, France

## Composition à base de chlorure de polyvinyle rigide et objets conformés avec une telle composition

L'invention concerne une composition perfectionnée à base de chlorure de polyvinyle rigide, notamment pour l'extrusion de tubes, de profilés et de produits similaires ; elle se rapporte également aux objets conformés avec une telle composition.

L'extrusion de tels articles en PVC rigide peut être effectuée de façon plus ou moins facile selon la composition de la préparation utilisée, qui se présente habituellement sous la forme d'un mélange poudreux ou granulé des ingrédients suivants : PVC, stabilisants, lubrifiants à caractère interne ou externe, charges minérales, additifs anti-UV, colorants, agents de modifications du comportement rhéologique, etc.

A l'heure actuelle, il existe de nombreuses préparations disponibles, mises au point à la suite d'essais empiriques. On a souvent constaté que ces compositions ne donnent pas toujours satisfaction, et peuvent même, dans certains cas, conduire à de mauvais résultats, soit au point de vue de l'aspect, soit encore sur le plan des propriétés mécaniques des articles conformés, ou enfin au point de vue de la rentabilité financière globale de l'opération.

On connaît par ailleurs, selon le brevet FR 2 256 930, un procédé de fabrication de PVC non collant pour la fabrication de films, feuilles, etc., par calandrage. La composition à base de PVC, objet de la présente invention, est par contre utilisée pour l'extrusion. En outre, la composition pour la mise en œuvre du procédé selon le brevet FR 2 256 930 précité, d'une part ne reproduit pas la composition selon l'invention dans la proportion particulière de chacun des constituants, et, d'autre part, le type de stabilisant utilisé est différent.

On a trouvé, et c'est ce qui fait l'objet de la présente invention, une nouvelle composition pour l'extrusion à base de chlorure de polyvinyle rigide, économique, facile à mettre en œuvre et donnant d'excellents résultats tant sur le plan des propriétés mécaniques que du coût de l'opération de conformation. Cette composition à base de PVC, comprenant en outre au moins un agent stabilisant thermique, un agent lubrifiant et des charges minérales, se caractérise en ce que, pour 100 parties de polymère, elle contient :

— une quantité comprise entre 0,1 et 0,5 partie d'un mélange de stabilisants thermiques, constitué pour partie essentielle d'un sel d'étain et d'un sel alcalino-terreux,

— une quantité comprise entre 1,2 et 4 parties d'un mélange de lubrifiants constitué pour partie essentielle de cire de paraffine et de cire de polyoléfine,

— et de 0,1 à 50 parties de charges minérales.

Par « composition à base de chlorure de polyvinyle », on entend des compositions dont le polymère est un chlorure de polyvinyle homopolymère ou éventuellement un copolymère. Ce copolymère est le plus généralement obtenu par copolymérisation de chlorure de vinyle avec d'autres monomères présentant une liaison éthylénique polymérisable, par exemple l'éthylène, les esters acryliques, le styrène, les esters vinyliques, l'acide ou l'anhydride maléique, les esters maléiques. L'acétate de vinyle et le chlorure de vinylidène sont les plus fréquemment utilisés. L'invention s'applique particulièrement aux copolymères contenant au moins 80 % en poids de chlorure de vinyle. Tout type d'homopolymère de chlorure de vinyle peut convenir, quel que soit son mode de préparation : polymérisation en masse, en suspension, en dispersion ou de tout autre type, et quelle que soit sa viscosité intrinsèque.

Les compositions selon l'invention peuvent contenir en outre tous les adjuvants habituellement utilisés, tels que agents modificateurs de résistance au choc, pigments ou colorants, agents modificateurs de structure, comme par exemple agents porogènes. Des agents antioxydants ou des agents de stabilisation de lumière visible ou U.V. peuvent être ajoutés dans ces compositions.

Comme stabilisants thermiques, on utilise selon l'invention un mélange constitué essentiellement d'un sel d'étain et d'un sel alcalino-terreux. Ce mélange comporte de 5 à 95 % de sel d'étain qui est choisi de préférence parmi les sels organiques d'étain, tels que les méthyl-étains, butyl-étains ou octyl-étains. Les autres radicaux organiques combinés à l'étain peuvent être des esters organiques exempts de soufre, ou de préférence des thioesters. Les esters sont habituellement des laurates, des maléates. Les thioesters sont habituellement des octylthioglycolates. Le mélange de stabilisants thermiques comporte de 95 à 5 % d'un sel alcalino-terreux, choisi parmi les sels des acides aliphatiques, tels que, par exemple, laurates, stéarates palmitates, octoates, undécylénates, ou parmi les sels des acides aromatiques ou des phénols, tels que, par exemple, benzoates, phénates. De préférence, on utilise comme alcalino-terreux le calcium et comme acide l'acide stéarique.

Aux concentrations proposées, c'est-à-dire inférieures à 0,5 pcr, (pcr = parties en poids pour cent parties de résine), on a constaté que des concentrations en sel d'étain inférieures à 5 % conduisaient à de mauvais résultats et que des concentrations supérieures à 95 % augmentaient inutilement le prix de revient.

Comme lubrifiants, on utilise un mélange de cire de paraffines et de cire de polyoléfines. Les cires de paraffines sont caractérisées par un point de fusion compris entre 72 °C et 115 °C. La concentration de ces produits doit être comprise entre 1,2 et 4 parties pcr pour cent parties de polymère. Au dessous de 1,2 %, on a constaté que l'on diminuait le débit de l'opération de transformation, et au-delà de 4 % que l'on gélifiait mal. Une concentration préférée est voisine de 1,5 %.

Les cires de polyoléfines peuvent être des cires de polyéthylène non oxydées ou oxydées dont le point de ramollissement est compris entre 83 °C et 145 °C.

Comme charges, on utilise des charges minérales connues, constituées par des oxydes de métaux, ou des carbonates ou des silicates, et plus particulièrement du carbonate de calcium et de l'oxyde de titane. Ces charges minérales peuvent avoir reçu un traitement de surface. Leur concentration varie de 0,1 à 50 pcr, de préférence entre 1 et 5 %. Un technicien déterminera ces pourcentages en fonction des résultats recherchés.

Les compositions à base de PVC rigide, contenant le PVC proprement dit ainsi que les différents additifs mentionnés plus haut, sont obtenues par mélange à froid ou à chaud dans un mélangeur rapide. Sous l'effet mécanique du brassage, la température augmente et le maximum atteint est fonction du temps de mélange.

On peut arrêter l'opération de mélange vers 40 °C environ, ce qui correspond au mélange dit « à froid », ou bien prolonger l'opération jusqu'à atteindre une température de 110 °C à 120 °C, ce qui correspond au mélange dit « à chaud ». Ces compositions peuvent être obtenues indifféremment par l'une ou l'autre de ces techniques de mélange.

L'extrusion des compositions à base de PVC rigide est effectuée de manière classique sur extrudeuses monovis ou bivis ou encore multivis. Dans les cas d'extrudeuses bivis, il est recommandé d'utiliser une température moyenne de l'ordre de 170 °C, avec un profil de température décroissant ; la première zone de chauffe est réglée à environ 185 °C et la dernière à 160 °C. Ces températures sont données à titre indicatif et peuvent être ajustées dans une plage de ± 20 °C, afin de parvenir à un niveau convenable de puissance absorbée par la machine et également afin de bien contrôler le niveau de gélification du produit fini.

La composition à base de PVC rigide selon l'invention est intéressante en ce qui concerne l'opération d'extrusion elle-même et la qualité du produit fini.

En ce qui concerne l'extrusion, on observe une bonne régularité d'écoulement du mélange, une grande facilité de dégazage, une faible puissance absorbée, et la possibilité d'extruder à un débit élevé. De plus, on constate que le réglage des épaisseurs est facilité, du fait d'une faible dispersion de ces dernières : les coefficients de variation des épaisseurs, mesurés par le rapport de l'écart-type à la moyenne, est sensiblement réduit par rapport à ce que donnent les préparations habituelles. De ce fait, le nombre d'interventions nécessaires pour maintenir l'épaisseur dans une plage fixée par avance est notablement réduit, ce qui contribue à faciliter l'extrusion. Par ailleurs, on a vérifié que ces préparations n'entraînent pas d'encrassement des filières, et que la bonne stabilité technique des mélanges de PVC rigide correspondant à ces préparations permet un recyclage aisé des déchets et notamment des chutes de lancement.

En ce qui concerne le produit fini, on observe en plus d'une bonne régularité d'épaisseur déjà mentionnée plus haut, que les caractéristiques mécaniques sont excellentes : les valeurs moyennes sont élevées, tandis que leur dispersion est faible, notamment pour les allongements à rupture qui reflètent le niveau de gélification. Il est donc aisé, à l'aide de ces préparations, de respecter les normes de qualités, qu'elles soient d'ordre dimensionnel (épaisseur) ou qu'elles soient d'ordre mécanique (contrainte et allongement à rupture). On observe également que ces bonnes caractéristiques s'étendent à différentes dimensions du produit fini : il n'est pas nécessaire d'ajuster les préparations pour passer des produits à paroi mince à des produits à paroi épaisse, et cela sur différents types d'extrudeuses. La possibilité d'utiliser une seule préparation permet de simplifier les problèmes de fabrication du mélange, ainsi que ceux de stockage dudit mélange.

Les exemples de réalisation qui suivent, donnés à titre indicatif et non limitatif, permettent d'illustrer la composition, objet de la présente invention, de manière à faire apparaître clairement les avantages procurés par ladite composition.

Exemple 1.

On fabrique un tube en PVC rigide de diamètre intérieur de 112,4 mm et de diamètre extérieur 125 mm. L'extrudeuse utilisée est une bivis de marque KESTERMAN et de type 86 à température graduée. La température moyenne d'extrusion est de 175 °C.

Dans un mélangeur rapide, on mélange à 110 °C :

| | |
|---|---|
| — PVC en poudre obtenu par polymérisation en masse (marque GB 1150 du Rhône Poulenc) | 100 parties |
| — Stéarate de calcium | 0,25 partie |
| — Sel d'étain (marque 17 MOK de CIBA) | 0,2 partie |
| — Cire de paraffine (marque MC Cérésine) | 1,4 partie |
| — Cire de polyéthylène oxydée (marque AC 316 d'Allied Chemical) | 0,2 partie |
| — Aid-Process (marque F 130 de CIBA : polymère acrylique modificateur de comportement rhéologique) | 0,5 partie |
| — Carbonate de calcium | 1,7 partie |
| — Noir de carbone | 0,04 partie |

Le débit atteint est de 180 kg/h pour un très bon aspect du tube, et notamment un coefficient de variation des épaisseurs de 3,9 %.

L'allongement à rupture des éprouvettes d'essai, obtenues à partir du tube extrudé, est égal à 150 %. La contrainte au seuil d'écoulement atteint 510 déca N/cm². Ces mesures sont effec-

tuées selon la norme NF T 54 026.

## Exemple 2.

On extrude sur une machine de marque KRAUSSMAFFEI et de type KMD 90, un tube de dimension 98,8-110 mm en utilisant la même composition et les mêmes conditions qu'à l'exemple 1.

Le débit atteint est égal à 295 kg/h pour un tube dont le coefficient de variation des épaisseurs est égal à 2,3 %.

L'allongement à rupture est égal à 127 %.

La contrainte au seuil d'écoulement est égale à 509 déca N/cm².

## Exemple 3.

On extrude un tube de grand diamètre, et de rapport épaisseur sur diamètre faible, sur une boudineuse de marque KESTERMAN et de type 130. Les dimensions du tube préparé sont de 302 × 315 mm et la composition est la même que précédemment.

L'extrusion se déroule bien mieux qu'avec les compositions habituelles, soit fortement stabilisées aux sels de plomb, soit fortement stabilisées au stéarate de calcium.

On n'observe notamment aucun accrochage, et aucune difficulté de réglage des épaisseurs.

Les propriétés mécaniques sont bonnes :
— contrainte au seuil d'écoulement 511 déca N/cm²,
— allongement à rupture : 147 %.

Le coefficient de variation des épaisseurs est égal à 4,3 % pour un débit volontairement limité à 250 kg/h.

## Exemple 4

On extrude un tube de petites dimensions : 21 mm × 25 mm sur une machine ANGER de type 80, en utilisant une composition et des conditions identiques à celles de l'exemple 1 :

On note, comme pour les exemples précédents :
— une baisse de la puissance absorbée,
— l'obtention d'un meilleur dégazage.

Le tube obtenu présente un coefficient de variation des épaisseurs égal à 2,6 %, soit une valeur notablement plus faible que celles auxquelles conduisent les compositions habituelles pour le même débit et égale à 4,6 %.

Les propriétés mécaniques sont élevées, comme pour les autres dimensions extrudées.

Ces exemples illustrent bien le fait qu'avec la même composition, on obtient des produits de bonne qualité, quelle que soit la dimension fabriquée et quel que soit le type d'extrudeuse utilisé.

## Exemple 5

On extrude la préparation suivante, préparée à froid :

— PVC obtenu par polymérisation en suspension (Ekavyl SL/66 d'Ugine Kuhlmann) ............................................. 100 parties
— Sel d'étain (octylthioétain) ................. 0,15 partie
— Stéarate de calcium .............................. 0,2 partie
— Cire de paraffine (MC de Cérésine) ...... 1,2 partie
— Cire de polyéthylène (AC 6A de Allied Chemical) .............................................. 0,3 partie
— Aid-Process (K 120N de Rohm et Haas : polymère acrylique modificateur de comportement rhéologique) ................... 0,5 partie
— Carbonate de calcium ............................ 1,7 partie
— Noir de carbone pigmentaire ................ 0,04 partie

L'extrudeuse utilisée est une KESTERMAN de type 107, le diamètre extrudé est de 98,8-100 mm.

On observe, comme pour la composition précédente citée dans les exemples 1 à 4, une meilleure extrudabilité que pour les compositions usuelles.

L'aspect du tube et les fluctuations d'épaisseur du tube sont également améliorés.

## Revendications

1. Composition pour l'extrusion à base de chlorure de polyvinyle rigide, comprenant en outre au moins un agent stabilisant thermique, un agent lubrifiant et des charges minérales, caractérisée en ce que, pour 100 parties de polymère, elle contient :
— entre 0,1 et 0,5 partie d'un mélange de stabilisants thermiques constitué pour partie essentielle d'un sel d'étain et d'un sel alcalino-terreux,
— entre 1,2 et 4 parties d'un mélange de lubrifiants constitué pour partie essentielle de cire de paraffine et de cire de polyoléfine,
— et de 0,1 à 50 parties de charges minérales.

2. Composition selon la revendication 1, caractérisée en ce que le mélange de stabilisants comporte de 5 à 95 % de sel d'étain et de 95 à 5 % de sel alcalino-terreux.

3. Composition selon l'une des revendications 1 et 2, caractérisée en ce que le sel d'étain est choisi parmi les sels organiques tels que les méthylétains, les butylétains et les octylétains, substitués par des radicaux esters contenant du soufre.

4. Composition selon l'une des revendications 1 et 3, caractérisée en ce que le sel alcalino-terreux est le stéarate de calcium.

5. Composition selon la revendication 1, caractérisée en ce que le mélange de lubrifiants comporte au moins 0,1 partie de cire de polyoléfine de point de ramollissement supérieur à 100 °C.

6. Composition selon la revendication 5, caractérisée en ce que la cire de polyoléfine est choisie parmi les cires de polyéthylène et les cires de polyéthylène oxydées de point de ramollissement supérieur à 100 °C.

7. Composition selon la revendication 1, caractérisée en ce que les charges minérales sont choisies parmi les oxydes, les carbonates et les silicates métalliques.

8. Objets conformés, tels que plaques, profilés, joncs, tubes obtenus par extrusion d'une composition selon l'une des revendications 1 à 7.

## Claims

1. Extrusion composition comprising rigid polyvinyl chloride, and further comprising at least one thermal stabilizing agent, a lubricating agent and mineral charges, characterized in that, for 100 parts of polymer, it contains :
— between 0.1 and 0.5 part of a mixture of thermal stabilizers, essentially comprising a tin salt and an alkaline-earth salt,
— between 1.2 and 4 parts of a mixture of lubricants comprising a paraffin wax and a polyolefin wax,
— and from 0.1 to 50 parts of mineral charges.

2. A composition according to claim 1, characterized in that the mixture of stabilizers comprises from 5 to 95 % of tin salt and from 95 to 5 % of alkaline-earth salt.

3. A composition according to either one of claims 1 or 2, characterized in that the tin salt is selected from organic salts such as methyltins, butyltins and octyltins, substituted with ester radicals containing sulphur.

4. A composition according to one of claims 1 to 3, characterized in that the alkaline-earth salt is calcium stearate.

5. A composition according to claim 1, characterized in that the mixture of lubricants comprises at least 0.1 part of polyolefin wax with a softening point higher than 100 °C.

6. A composition according to claim 5, characterized in that the polyolefin wax is selected from the polyethylene waxes and the oxidized polyethylene waxes with a softening point higher than 100 °C.

7. A composition according to claim 1, characterized in that the mineral charges are selected from the metal oxides, carbonates and silicates.

8. Formed articles, such as plates, profiles, rushes, tubes, obtained by the extrusion of a composition according to one of claims 1 to 7.

## Ansprüche

1. Zum Extrudieren geeignete Zusammensetzung auf der Basis von starrem Polyvinylchlorid, bestehend unter anderem aus mindestens einem thermischen Stabilisierungsmittel, einem Gleitmittel und mineralischen Zusätzen, dadurch gekennzeichnet, daß sie aus folgenden auf 100 Teile des Polymeres bezogenen Anteilen besteht :
— zwischen 0,1 und 0,5 Teile einer Mischung aus thermischen Stabilisatoren, die im wesentlichen aus einem Zinnsalz und einem Erdalkalisalz gebildet wird,
— zwischen 1,2 und 4 Teile einer Gleitmittelmischung, die im wesentlichen aus Paraffinwachs und Polyolefinwachs besteht,
— und aus 0,1 bis 50 Teilen mineralischer Zuschläge.

2. Zusammensetzung nach Anspruch 1, dadurch gekennzeichnet, daß sich die Mischung aus Stabilisatoren zusammensetzt aus 5 bis 95 % Zinnsalz und 95 bis 5 % Erdalkalisalz.

3. Zusammensetzung nach einem der Ansprüche 1 und 2, dadurch gekennzeichnet, daß das Zinnsalz aus organischen Salzen ausgewählt ist, wie Methyl-Zinnsalzen, Butyl-Zinnsalzen und Oktyl-Zinnsalzen, die durch schwefelhaltige Esterradikale substituiert sind.

4. Zusammensetzung nach einem der Ansprüche 1 bis 3, dadurch gekennzeichnet, daß das Erdalkalisalz das Stearat des Kalziums ist.

5. Zusammensetzung nach Anspruch 1, dadurch gekennzeichnet, daß die Gleitmittelmischung zumindest 0,1 Teile des Polyolefinwachses mit einem über 100 °C liegenden Erweichungspunkt aufweist.

6. Zusammensetzung nach Anspruch 5, dadurch gekennzeichnet, daß der Polyolefinwachs ausgewählt ist aus Polyäthylenwachsen und oxidierten Polyäthylenwachsen mit einem über 100 °C liegenden Erweichungspunkt.

7. Zusammensetzung nach Anspruch 1, dadurch gekennzeichnet, daß die mineralischen Zuschläge ausgewählt sind aus Oxyden, Karbonaten und Metallsilikaten.

8. Gegenstände, wie Platten, Profile, Ringe und Rohre, hergestellt durch Extrusion einer Zusammensetzung nach einem der Ansprüche 1 bis 7.